(19) Europäisches Patentamt
European Patent Office
Office européen des brevets

(11) **EP 3 211 826 B1**

(12) **FASCICULE DE BREVET EUROPEEN**

(45) Date de publication et mention
de la délivrance du brevet:
**12.06.2019   Bulletin 2019/24**

(51) Int Cl.:
***H04L 9/32*** (2006.01)

(21) Numéro de dépôt: **17157289.4**

(22) Date de dépôt: **22.02.2017**

(54) **MÉTHODE DE GESTION DE CERTIFICATS IMPLICITES AU MOYEN D'UNE INFRASTRUCTURE À CLÉS PUBLIQUES DISTRIBUÉE**

METHODE ZUR VERWALTUNG VON IMPLIZITEN ZERTIFIKATEN MITHILFE EINER VERTEILTEN PUBLIC-KEY-INFRASTRUKTUR

METHOD FOR HANDLING IMPLICIT CERTIFICATES USING A DISTRIBUTED PUBLIC KEY INFRASTRUCTURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **25.02.2016   FR 1651549**

(43) Date de publication de la demande:
**30.08.2017   Bulletin 2017/35**

(73) Titulaire: **Commissariat à l'Energie Atomique et aux Energies Alternatives**
**75015 Paris (FR)**

(72) Inventeur: **SAVRY, Olivier**
**38360 Sassenage (FR)**

(74) Mandataire: **Brevalex**
**56, Boulevard de l'Embouchure**
**B.P. 27519**
**31075 Toulouse Cedex 2 (FR)**

(56) Documents cités:
- ZHEN LUO ET AL: "A Self-organized Public-Key Certificate System in P2P network", JOURNAL OF NETWORKS, vol. 6, no. 10, 1 octobre 2011 (2011-10-01), XP055314794, FI ISSN: 1796-2056, DOI: 10.4304/jnw.6.10.1437-1443
- CAPKUN S ET AL: "SELF-ORGANIZED PUBLIC-KEY MANAGEMENT FOR MOBILE AD HOC NETWORKS", IEEE TRANSACTIONS ON MOBILE COMPUTING, IEEE SERVICE CENTER, LOS ALAMITOS, CA, US, vol. 2, no. 1, 1 janvier 2003 (2003-01-01) , pages 52-64, XP001171685, ISSN: 1536-1233, DOI: 10.1109/TMC.2003.1195151
- Siamak Sarmady: "A Survey on Peer-to-Peer and DHT", , 24 juin 2010 (2010-06-24), XP055314875, Extrait de l'Internet: URL:https://arxiv.org/ftp/arxiv/papers/100 6/1006.4708.pdf
- SAVIO SCIANCALEPORE ET AL: "Key Management Protocol with Implicit Certificates for IoT systems", PROCEEDINGS OF THE 2015 WORKSHOP ON IOT CHALLENGES IN MOBILE AND INDUSTRIAL SYSTEMS, IOT-SYS '15, 1 janvier 2015 (2015-01-01), pages 37-42, XP055314867, New York, New York, USA DOI: 10.1145/2753476.2753477 ISBN: 978-1-4503-3502-7
- Juan Caubet ET AL: "Securing Identity Assignment Using Implicit Certificates in P2P Overlays" In: "IFIP Advances in Information and Communication Technology", 1 January 2013 (2013-01-01), XP055548186, ISSN: 1868-4238 vol. 401, pages 151-165, DOI: 10.1007/978-3-642-38323-6_11,

EP 3 211 826 B1

**Description**

## DOMAINE TECHNIQUE

L'objet de la présente invention concerne le domaine de la cryptographie et plus particulièrement celui des infrastructures à clés publiques.

## ÉTAT DE LA TECHNIQUE ANTÉRIEURE

Les systèmes de cryptographie asymétrique, dits aussi à clé publique font traditionnellement appel à des autorités de certification ayant pour fonction de délivrer, d'authentifier et, le cas échéant, de révoquer des certificats de clés publiques. Plus précisément, un noeud détenteur d'un couple de clé privée et clé publique selon un cryptosystème asymétrique (tel que le cryptosystème RSA par exemple), peut demander à une autorité de certification de lui établir un certificat permettant de lier sa clé publique à son identité. Un tel certificat est généralement obtenu en effectuant un hachage (par exemple un hachage SHA) d'une information contenant la clé publique et l'identifiant du détenteur, le résultat du hachage ou condensat étant signé par la clé privée de l'autorité de certification. Ainsi tout tiers souhaitant échanger de manière sécurisée avec le noeud en question et faisant confiance à l'autorité de certification ou CA (*Certification Authority*) peut préalablement s'assurer auprès de cette dernière de l'authenticité de la clé publique du noeud. En pratique, les autorités de certification sont organisées de manière hiérarchique selon leur degré de confiance, une clé publique d'une autorité de certification pouvant être elle-même authentifiée auprès d'une autorité de certification de rang supérieur et ce, jusqu'à une autorité de certification racine. On rappelle que les certificats de clés publiques obéissent à un format normalisé par l'ITU, dit format X.509.

Toutefois, les cryptosystèmes asymétriques classiques, tels que RSA, utilisent des clés (privées et publiques) de grande taille (2 ou 4 Kbits) et les certificats X.509 associés sont également très volumineux (plusieurs kilo-octets). Ils sont par conséquent inadaptés au domaine de l'Internet des objets (IoT) dans lequel les noeuds ne disposent généralement que de faibles ressources en mémoire et en calcul. Pour cette raison, on préfère utiliser des cryptosystèmes sur courbes elliptiques avec certificats implicites ou ECQV (*Elliptic Curve Qu-Vanstone Implicit Certificate).*

On rappelle tout d'abord qu'un cryptosystème sur courbe elliptique ou ECC (*Elliptic Curve Cryptography*) est défini par un ensemble de paramètres, dit paramètres de domaine, à savoir notamment les constantes intervenant dans l'équation elliptique définie sur $\mathbf{Z}_p$ (où $p$ est premier), le point générateur $G$ et l'ordre $n$ du groupe cyclique engendré par le point générateur. Le chiffrement ECC est basé sur le problème du logarithme discret. Plus précisément, une clé privée $c$ (nombre entier) est liée à la clé publique $Q$ (point de la courbe elliptique $E$) par $cG = Q$.

Le principe du chiffrement sur courbe elliptique avec certificat implicite est rappelé ci-après. On suppose qu'Alice souhaite générer un couple (clé privée, clé publique) et obtenir un certificat de sa clé publique auprès d'une autorité de certification *CA*.

Alice génère un nombre entier $\alpha$ (qui va servir à obtenir sa clé secrète) et envoie $\alpha G$ à l'autorité de certification CA.

L'autorité de certification CA possède une clé privée $c$ et une clé publique correspondante $cG$. Elle génère un nombre entier $k$ compris dans $[1,n\text{-}1]$ et calcule une donnée $\gamma$, dite donnée de reconstruction de clé publique (*public key reconstruction data*) au moyen de :

$$\gamma = \alpha G + kG \tag{1}$$

La donnée $\gamma$ appartient par conséquent à la courbe elliptique.

L'autorité de certification CA calcule le condensat $e = h(\gamma\|ID_A)$ où $ID_A$ est un identifiant d'Alice (par exemple son adresse IPv6), $\|$ est une opération de concaténation et $h(.)$ est une fonction de hachage (telle que SHA-1).

L'autorité de certification CA calcule ensuite la donnée de reconstruction de clé privée (*private key reconstruction data*) par:

$$s = ek + c \mod .n \tag{2}$$

L'autorité de certification envoie à Alice le couple de données de reconstruction de clé privée et de clé publique $(s,\gamma)$. Cette dernière peut alors calculer sa clé privée, $a$, et sa clé publique, $Q_A$, comme suit :

$$a = e\alpha + s \mod .n \tag{3-1}$$

$$Q_A = e\gamma + Q_{CA} \qquad\qquad (3\text{-}2)$$

où $Q_{CA}$ est la clé publique de l'autorité de certification.

On voit qu'un tiers, Bob, désirant échanger avec Alice de manière sécurisée, peut directement obtenir sa clé publique $Q_A$ à partir de son certificat implicite $\gamma$.

Cette méthode de chiffrement et de certification est bien adaptée à l'Internet des objets (IoT) car les clés ainsi que les certificats implicites sont de taille très faible (128 ou 256 bits)

Il n'en demeure pas moins que les certificats implicites sont gérés (création, stockage, révocation) de manière centralisée par une autorité de certification. Or, la confiance dans une autorité de certification centralisée peut être sujette à caution ou remise en cause, tout particulièrement dans le domaine de l'Internet des objets où leur indépendance n'est pas forcément garantie.

Le but de la présente invention est par conséquent de proposer une méthode de gestion de certificats implicites, notamment dans le domaine de l'Internet des objets, qui ne présente pas les inconvénients précités. En particulier, l'invention vise à proposer une méthode de gestion de certificats implicites offrant un degré de sécurité très élevé et indépendante d'une autorité de certification unique.

## EXPOSÉ DE L'INVENTION

La présente invention est définie par une méthode de gestion de certificats implicites de clés publiques pour un réseau de communication, les clés publiques étant relatives à un cryptosystème sur courbe elliptique, chaque certificat implicite permettant d'identifier une clé publique d'un noeud du réseau et chaque noeud étant identifié par un identifiant, dans laquelle :

- un premier certificat implicite ($\gamma_{A_0}$) d'un noeud $A$ est calculé par et stocké dans un premier noeud indexeur ($B_0$), le premier noeud indexeur étant déterminé par une table de hachage distribuée, à partir d'un condensat d'identifiant obtenu comme hachage d'une première valeur, contenant l'identifiant du noeud $A$ ;
- une première clé publique ($Q_{A_0}$) du noeud $A$ est calculée à partir du premier certificat implicite et de la clé publique du premier noeud indexeur ($Q_{B_0}$);
- un second certificat implicite ($\gamma_{A_1}$) du noeud $A$ est calculé par un second noeud indexeur ($B_1$), le second noeud indexeur étant déterminé par ladite table de hachage distribuée, à partir d'un premier condensat de certificat ($e_{A_0}$) obtenu comme hachage d'une seconde valeur, contenant le premier certificat implicite et l'identifiant du noeud $A$, ledit second certificat implicite étant transmis au premier noeud indexeur pour y être stocké ;
- une seconde clé publique ($Q_{A_1}$) du noeud $A$ est calculée à partir de la première clé publique ($Q_{A_0}$) du noeud $A$ et de la clé publique du second noeud indexeur $Q_{B_1}$).

Le condensat d'identifiant est avantageusement obtenu par $h(ID_A\|keyword)$ où $ID_A$ est l'identifiant du noeud $A$, $keyword$ est un mot de passe connu des noeuds du réseau, $\|$ est une opération de concaténation et $h$ est une fonction de hachage.

Selon un premier mode de réalisation :

- la première clé publique du noeud $A$ est calculée par $Q_{A_0} = e_{A_0}\gamma_{A_0} + Q_{B_0}$ où $\gamma_{A_0}$ est le premier certificat implicite, $e_{A_0}$ est le premier condensat de certificat et $Q_{B_0}$ est la clé publique du premier noeud indexeur;
- la seconde clé publique du noeud $A$ est calculée par $Q_{A_1} = Q_{A_0} + e_{A_1}\gamma_{A_1} + Q_{B_1}$ où $\gamma_{A_1}$ est le second certificat implicite du noeud $A$, $e_{A_1}$ est un second condensat de certificat obtenu comme hachage d'une seconde valeur, contenant le second certificat implicite du noeud $A$, et $Q_{B_1}$ est la clé publique du second noeud indexeur.

Selon un second mode de réalisation de l'invention, on génère une pluralité de certificats implicites pour le noeud $A$ au cours d'une pluralité d'itérations successives, et à l'itération $i$ :

- un $(i+1)^{\text{ème}}$ noeud indexeur ($B_i$) calcule un $(i+1)^{\text{ème}}$ certificat implicite ($\gamma_{A_i}$) du noeud $A$, le $(i+1)^{\text{ème}}$ noeud indexeur étant déterminé par la table de hachage distribuée, à partir d'un $i^{\text{ème}}$ condensat de certificat ($e_{A_{i-1}}$) obtenu comme hachage d'une $(i+1)^{\text{ème}}$ valeur contenant le $i^{\text{ème}}$ certificat implicite du noeud $A$ obtenu à l'itération précédente, et l'identifiant du noeud $A$ ($ID_A$), ledit $(i+1)^{\text{ème}}$ certificat implicite du noeud $A$ étant transmis au premier noeud indexeur pour y être stocké ;
- une $(i+1)^{\text{ème}}$ clé publique ($Q_{A_i}$) du noeud $A$ est calculée à partir de la $i^{\text{ème}}$ clé publique ($Q_{A_{i-1}}$) du noeud $A$, obtenue à l'itération précédente, et de la clé publique du $(i+1)^{\text{ème}}$ noeud indexeur ($Q_{B_1}$).

Le $(i+1)^{\text{ème}}$ condensat de certificat est avantageusement obtenu par $e_{A_i} = h(\gamma_{A_i} \| ID_A)$ ou bien $e_{A_i} = h(\gamma_{A_i} \| \gamma_{A_{i-1}} \| ID_A)$ où $\gamma_{A_i}$ et $\gamma_{A_{i-1}}$ sont respectivement les $(i+1)^{\text{ème}}$ et $i^{\text{ème}}$ certificats implicites, $ID_A$ est l'identifiant du noeud $A$ et $\|$ est une opération de concaténation et $h$ est une fonction de hachage.

Alternativement, le $(i+1)^{\text{ème}}$ condensat de certificat est obtenu par $e_{A_i} = h(\gamma_{A_i} \| ID_A \| D_{A_i})$ ou bien $e_{A_i} = h(\gamma_{A_i} \| \gamma_{A_{i-1}} \| ID_A \| D_{A_i})$ où $\gamma_{A_i}$ et $\gamma_{A_{i-1}}$ sont respectivement les $(i+1)^{\text{ème}}$ et $i^{\text{ème}}$ certificats implicites, $ID_A$ est l'identifiant du noeud $A$, $D_{A_i}$ est une date de validité associée au $(i+1)^{\text{ème}}$ certificat implicite, $\|$ est une opération de concaténation et $h$ est une fonction de hachage.

La $(i+1)^{\text{ème}}$ clé publique du noeud $A$ peut être calculée par $Q_{A_i} = Q_{A_{i-1}} + e_{A_i} \gamma_{A_i} + Q_{B_i}$ où $\gamma_{A_i}$ est le $(i+1)^{\text{ème}}$ certificat implicite du noeud $A$, $e_{A_i}$ est le $(i+1)^{\text{ème}}$ condensat de certificat et $Q_{B_i}$ est la clé publique du $(i+1)^{\text{ème}}$ noeud indexeur.

L'intervalle entre deux itérations successives peut avoir une durée fixe prédéterminée.

Alternativement, au $(i+1)^{\text{ème}}$ certificat implicite ($\gamma_{A_i}$) calculé à l'itération $i$, est associée une date de validité ($D_{A_i}$) et l'on effectue l'itération suivante lorsque cette date de validité est échue.

Alternativement encore, l'intervalle entre deux itérations successives peut avoir une durée pseudo-aléatoire.

Dans tous les cas, on pourra prévoir qu'à l'itération $i$, le premier noeud indexeur stocke, en relation avec le condensat d'identifiant, une liste des certificats implicites $\gamma_{A_j}$, $j = 0,...,i$ obtenus lors des itérations successives.

En outre, à l'itération $i$, le premier noeud indexeur peut stocker en relation avec le condensat d'identifiant, une liste des dates de validité $D_{A_j}$, $j = 0,...,i$ desdits certificats implicites et/ou une liste des taux de confiance et réputation $T \& R_j$, $j = 0,...,i$ où $T \& R_j$ est le taux de confiance et réputation du $(j+1)^{\text{ème}}$ noeud indexeur.

## BRÈVE DESCRIPTION DES DESSINS

D'autres caractéristiques et avantages de l'invention apparaîtront à la lecture d'un mode de réalisation préférentiel de l'invention, en faisant référence aux figures jointes parmi lesquelles :

La Fig. 1 représente un exemple de répartition du stockage de certificats implicites dans différents noeuds selon une table de hachage distribuée ;
La Fig. 2 représente un ordinogramme de la méthode de gestion de certificats implicites de clés publiques selon un premier mode de réalisation de l'invention ;
La Fig. 3 représente un ordinogramme de la méthode de gestion de certificats implicites de clés publiques selon un second mode de réalisation de l'invention.

## EXPOSÉ DÉTAILLÉ DE MODES DE RÉALISATION PARTICULIERS

Nous considérerons dans la suite une pluralité de noeuds d'un réseau, par exemple un réseau 6LoWPAN dans le domaine de l'Internet des objets, relié à Internet IP par une passerelle. L'homme du métier comprendra toutefois que l'invention peut trouver à s'appliquer à un réseau quelconque.

Une première idée à la base de l'invention est de ne pas stocker les certificats implicites dans un seul noeud, par exemple au sein d'un serveur dédié, mais au contraire de les stocker de manière distribuée dans une pluralité de noeuds au moyen d'une table de hachage distribuée ou DHT (Distributed Hash Table).

On rappelle qu'une table DHT permet de trouver à partir d'une clé, l'adresse d'un noeud (ou les adresses de plusieurs noeuds) où se trouve stockée l'information (encore dénommée valeur dans le contexte d'une DHT) associée à cette clé. On pourra trouver une introduction aux techniques de DHT dans l'article de S. Sarmady intitulé « A Survey on Peer-to-Peer and DHT », arXiv preprint arXiv:1006.4708, 2010.

Dans la suite, le stockage des certificats implicites sera décrit selon le protocole Chord. L'homme du métier comprendra toutefois que d'autres protocoles de stockage par DHT pourront être alternativement utilisés sans sortir pour autant du cadre de la présente invention.

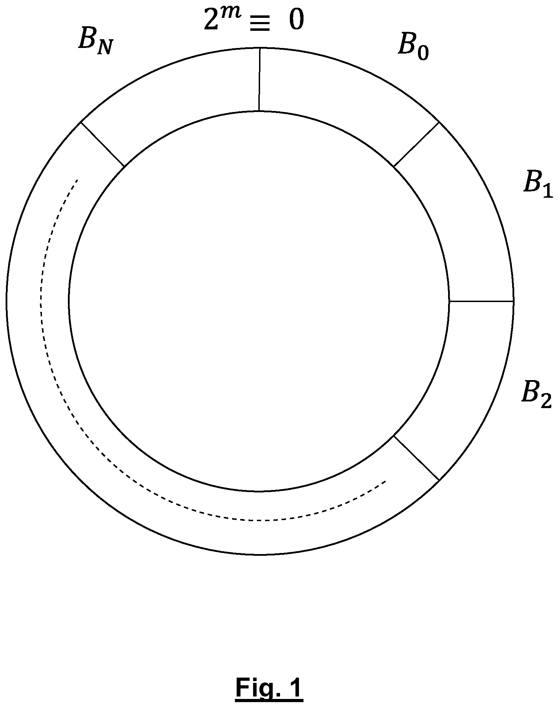

Comme nous l'avons vu plus haut, les certificats implicites sont générés au moyen d'une fonction de hachage $h$ (par exemple un hachage SHA). Si l'on note $m$ le nombre de bits des condensats, la fonction $h$ prend ses valeurs dans l'intervalle $[0, 2^m-1]$. Cet intervalle peut être rebouclé sur lui-même (la valeur $2^m$ coïncidant alors avec la valeur 0) et représenté sous forme d'un cercle comme illustré en Fig. 1.

Selon un premier exemple de réalisation, l'intervalle $[0, 2^m-1]$ est divisé en une pluralité de segments consécutifs (portions de couronne dans la Fig. 1), à chaque segment étant associé un noeud représentatif, à savoir un noeud du réseau tel que sa valeur de hachage (condensat) soit comprise dans le segment en question. Autrement dit, à un segment $[a,b[ \subset [0, 2^m-1]$ on associe un noeud $B_i \in \{B_0,...,B_N\}$ tel que $h(B_i) \in [a,b[$. On dit alors que le noeud $B_i$ gère le segment $[a,b[$ ou les points de ce segment.

De préférence, selon un second exemple de réalisation, on effectue un recouvrement de l'intervalle $[0, 2^m-1]$ par une pluralité de segments, ces segments pouvant se chevaucher avec un degré de chevauchement, $K$, autrement dit tout point de cet intervalle appartient à au moins $K$ segments distincts.

4

Les noeuds associés aux différents segments sont dénommés noeuds indexeurs et contiennent une copie de la table DHT. La table DHT donne, pour chaque segment, le noeud indexeur chargé de gérer les certificats implicites appartenant à ce segment.

Ainsi, pour récupérer le certificat implicite d'une clé publique appartenant à un noeud caractérisé par son identifiant *ID*, par exemple son adresse IPv6, on calcule la valeur de hachage *h(ID)* et l'on recherche dans la table DHT un noeud indexeur $A_i$ chargé de gérer un segment contenant *h(ID)*. Le certificat implicite pourra être récupéré auprès de ce noeud indexeur.

Les noeuds indexeurs peuvent le cas échéant être organisés de manière hiérarchique, un niveau grossier d'indexation étant réalisé par des noeuds indexeurs de premier niveau pointant vers des noeuds indexeurs d'un second niveau chargé d'une indexation plus fine (c'est-à-dire d'une segmentation plus fine). Dans le domaine de l'Internet des objets, le noeud indexeur racine peut être la passerelle entre le réseau 6LoWPAN et Internet.

En tout état de cause, on comprendra que le second exemple de réalisation présente l'avantage d'offrir une redondance de stockage en raison du chevauchement des segments. Ainsi, si l'un desdits noeuds indexeurs en charge du segment pertinent quitte le réseau ou tombe en panne, le certificat implicite pourra être récupéré alternativement auprès des *K*-1 autres noeuds.

Le cas échéant, chaque segment pourra être géré par plusieurs noeuds indexeurs, chaque noeud indexeur étant alors affecté d'un niveau de priorité. Ainsi, on pourra s'adresser d'abord à un premier noeud indexeur de haute priorité gérant le segment qui contient *h(Id)* et, en cas de surcharge de ce premier noeud indexeur, à un second noeud de moindre priorité gérant ce même segment.

Le stockage et la gestion des certificats implicites sont ainsi distribués auprès d'une pluralité de noeuds du réseau. Ces noeuds sont avantageusement choisis parmi ceux qui présentent la plus grande capacité mémoire.

Pour éviter qu'un noeud indexeur puisse s'attribuer un segment de la DHT, on pourra avantageusement ajouter un mot de passe, *keyword*, connu par l'ensemble des noeuds du réseau à l'identifiant du noeud, *ID*, avant de lui appliquer la fonction de hachage. Plus précisément, pour un segment [*a*,*b*[ donné, le noeud indexeur de ce segment (et gérant par conséquent les certificats implicites tombant dans ce segment) sera alors choisi parmi les noeuds $B_i$ tel que $h(ID_{B_i} \| keyword) \in [a,b[$.

Une seconde idée à la base de la présente invention est de chaîner les certificats implicites pour renforcer la sécurité des certificats et l'authentification des clés publiques qu'ils contiennent.

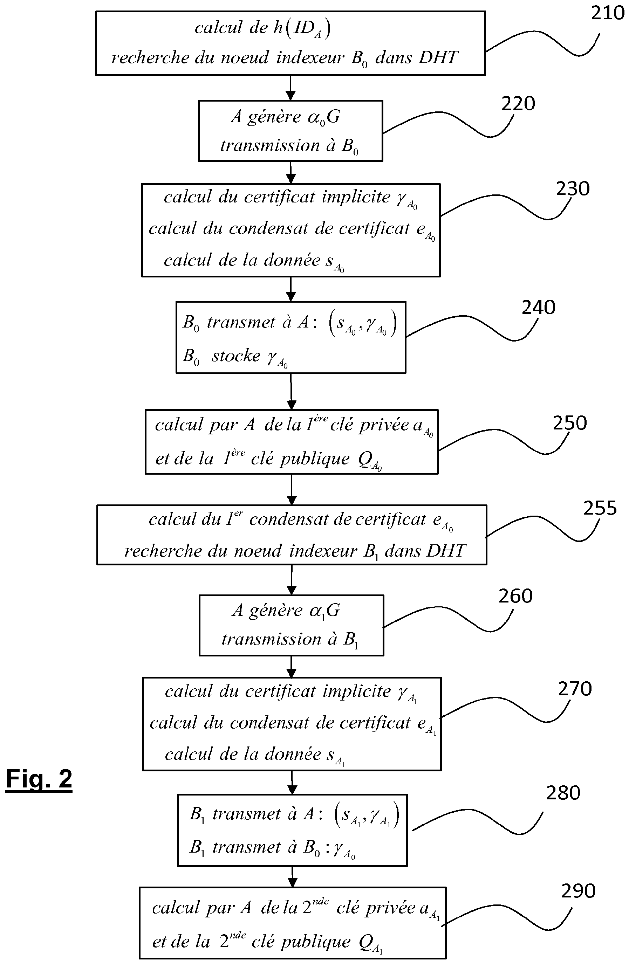

La Fig. 2 représente de manière schématique une méthode de gestion de certificats implicites selon un premier mode de réalisation de l'invention.

On suppose qu'un noeud *A* (Alice) souhaite obtenir un certificat implicite pour une clé publique selon un cryptosystème sur courbe elliptique ECC. Le cryptosystème ECC est défini par un ensemble de paramètres de domaine (*domain parameters*) donnés, à savoir les constantes intervenant dans l'équation elliptique définie sur $\mathbf{Z}_p$ (où *p* est premier), le point générateur *G* et l'ordre *n* du groupe cyclique engendré par le point générateur.

A l'étape 210, le noeud *A* calcule la valeur de hachage $h(ID_A)$, où $ID_A$ est un identifiant du noeud *A*. La valeur $h(Id_A)$ sera dénommée pour cette raison condensat d'identifiant. Le noeud *A* détermine au moyen de la table DHT un noeud indexeur chargé de la gestion d'un segment contenant $h(ID_A)$. Optionnellement, un mot de passe pourra être concaténé à l'identifiant avant d'effectuer le hachage. Dans tous les cas, on note $B_0$ ce noeud indexeur.

A l'étape 220, le noeud *A* génère un entier $\alpha_0$ et transmet $\alpha_0 G$ au noeud $B_0$. En pratique seule la coordonnée $x_0$ de $\alpha_0 G$ peut être transmise, le noeud $B_0$ connaissant les paramètres de domaine.

Le noeud $B_0$ possède une clé privée $b_0$ et une clé publique correspondante $Q_{B_0} = b_0 G$.

A l'étape 230, le noeud $B_0$ calcule des données de reconstruction de clé privée et de clé publique comme suit : Le noeud $B_0$ génère un entier $k_{B_o}$ compris dans l'intervalle [1,*n*-1] et calcule une donnée de reconstruction de clé publique $\gamma_0$ au moyen de :

$$\gamma_0 = \alpha_0 G + k_0 G \tag{4-1}$$

Cette donnée de reconstruction de clé publique constitue le premier certificat implicite (de la clé publique) du noeud *A*.

Le noeud indexeur $B_0$ calcule ensuite le condensat $e_{A_0} = h(\gamma_{A_0} \| ID_A)$ ou bien encore le condensat $e_{A_0} = h(\gamma_{A_0} \| ID_A \| \| D_{A_0})$ où $D_{A_0}$ est la date de validité du certificat implicite du noeud *A* et $\|$ désigne comme précédemment l'opération de concaténation. En tout état de cause, le condensat $e_{A_0}$, dit premier condensat de certificat, est obtenu par le hachage d'une information contenant le premier certificat implicite $\gamma_{A_0}$ et l'identifiant du noeud *A*. Quelle que soit la forme retenue pour le condensat, le noeud $B_0$ détermine à partir de ce dernier une donnée de reconstruction de clé privée :

$$s_{A_0} = e_{A_0} k_{A_0} + b_0 \quad \mod.n \tag{4-2}$$

A l'étape 240, le noeud indexeur $B_0$ envoie au noeud $A$ le couple $(s_{A_0}, \gamma_{A_0})$ constitué par la donnée de reconstruction de clé privée et la donnée de reconstruction de clé publique. En outre, $B_0$ stocke dans sa mémoire locale le certificat implicite $\gamma_{A_0}$ et, le cas échéant, la date de validité $D_{A_0}$ de ce certificat, en relation avec le condensat d'identifiant $h(ID_A)$.

A l'étape 250, le noeud $A$ construit une première clé privée et une première clé publique respectivement au moyen des données de reconstruction des clés privée et publique, à savoir :

$$a_{A_0} = e_{A_0} \alpha_0 + s_{A_0} \quad \mod.n \tag{5-1}$$

$$Q_{A_0} = e_{A_0} \gamma_{A_0} + Q_{B_0} \tag{5-2}$$

A l'étape 255, on détermine un noeud indexeur $B_1$ gérant le premier certificat implicite dans la DHT. Plus précisément le noeud $B_1$ est un noeud indexeur de la DHT pour un segment contenant le premier condensat de certificat, à savoir $e_{A_0} = h(\gamma_{A0}\|ID_A)$ ou l'une des variantes précitées.

A l'étape 260, le noeud $A$ génère un entier $\alpha_1$ et transmet $\alpha_1 G$ au noeud $B_1$. Le noeud $B_1$ possède une clé privée $b_1$ et une clé publique correspondante $Q_{B_1} = b_1 G$.

A l'étape 270, le noeud $B_1$ calcule des données de reconstruction de clé privée et de clé publique. Plus précisément le noeud $B_1$ génère un entier $k_{B_1}$ compris dans l'intervalle $[1,n\text{-}1]$ et calcule une donnée de reconstruction de clé publique $\gamma_{A_1}$ au moyen de :

$$\gamma_{A_i} = \alpha_i G + k_{B_i} G \tag{6-1}$$

Cette donnée de reconstruction de clé publique constitue le second certificat implicite du noeud $A$.

Le noeud indexeur $B_1$ calcule ensuite un second condensat de certificat défini par $e_{A_1} = h(\gamma_{A_1}\|ID_A)$ ou $e_{A_1} = h(\gamma_{A_1}\|ID_A\|D_{A1})$ ou bien encore, en consolidant les certificats $e_{A_1} = h(\gamma_{A_1}\|\gamma_{A0}\|ID_A)$ ou $e_{A_1} = h(\gamma_{A1}\|\gamma_{Ao}\|ID_A\|ID_{A1})$ où $D_1$ est la date de validité du certificat implicite du noeud $B_1$.

Le noeud indexeur $B_1$ détermine à partir du second condensat de certificat une donnée de reconstruction de clé privée :

$$s_{A_1} = e_{A_1} k_{B_1} + b_1 \quad \mod.n \tag{6-2}$$

A l'étape 280, le noeud indexeur $B_1$ envoie au noeud $A$ le couple $(s_{A_1}, \gamma_{A_1})$ constitué par la donnée de reconstruction de clé privée $s_{A_1}$ et le second certificat implicite.

En outre, le noeud $B_1$ transmet au noeud $B_0$ le second certificat implicite $\gamma_{A_1}$ et, le cas échéant, la date de validité $D_{A_1}$ de ce certificat. Le noeud $B_0$ stocke dans sa mémoire locale le second certificat implicite (ainsi que, éventuellement, la date de validité $D_{A_1}$) en relation avec le condensat d'identifiant $h(Id_A)$.

On comprend ainsi que sont stockés, en relation avec $h(Id_A)$, les premier et second certificats implicites $\gamma_{A_0}$, $\gamma_{A_1}$ et le cas échéant, leurs dates de validité respectives $D_{A_0}$, $D_{A_1}$.

A l'étape 290, le noeud $A$ construit une seconde clé privée à partir de la donnée de reconstruction de clé privée, $s_{A_1}$, et de sa première clé privée, $a_{A_0}$, soit :

$$a_{A_1} = a_{A_0} + e_{A_1} \alpha_1 + s_{A_1} \quad \mod.n \tag{7-1}$$

De manière similaire, le noeud $A$ construit une seconde clé publique à partir de la donnée de reconstruction de clé publique, $\gamma_{A_1}$, et de sa première clé publique, $Q_{A0}$ :

$$Q_{A_1} = Q_{A_0} + e_{A_1} \gamma_{A_1} + Q_{B_1} \tag{7-2}$$

On peut montrer que la relation $Q_{A1} = a_{A1} G$ est bien vérifiée.

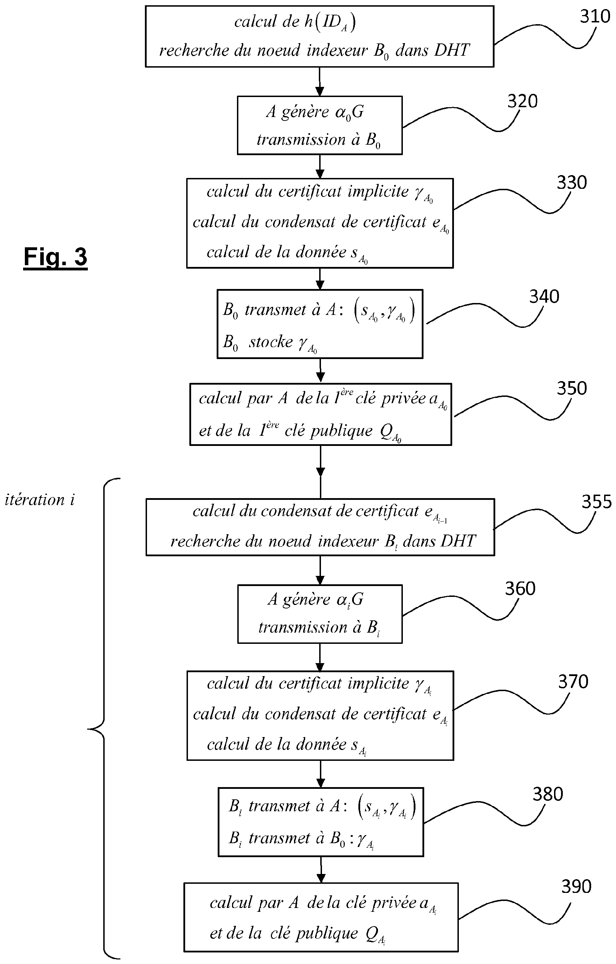

La Fig. 3 représente de manière schématique une méthode de gestion de certificats implicites selon un second mode de réalisation de la présente invention.

Nous supposerons que le cryptosystème sur courbe elliptique est le même que dans le premier mode de réalisation. Le noeud $A$ souhaite à nouveau obtenir un certificat implicite pour une clé publique relevant de ce cryptosystème.

La génération du certificat implicite et des clés du noeud $A$ est initialisée par les étapes 310 à 350. Les étapes 310 à 350 sont respectivement identiques aux étapes 210 à 250 et leur description ne sera donc pas reprise ici.

Un certain temps après la phase d'initialisation, pouvant correspondre à la durée de validité du certificat implicite, ou bien encore à l'échéance d'une période de répétition, ou encore une durée obtenue par un tirage pseudo-aléatoire, le certificat implicite est enrichi par un processus de chaînage par récurrence en relation avec les étapes 360 à 390. De manière générale, l'intervalle entre deux itérations successives peut être fixe ou bien dépendre de la durée de validité du certificat ou bien encore être pseudo-aléatoire.

Nous supposons ici que la $(i\text{-}1)^{\text{ème}}$ itération a déjà été effectuée et nous considérons la $i^{\text{ème}}$ itération.

A l'étape 355, le noeud $A$ recherche le noeud $B_i$ qui gère le condensat $e_{A_{i\text{-}1}}$ dans la DHT, autrement dit $B_i$ est un noeud indexeur pour un segment qui contient $e_{A_{i\text{-}1}}$.

A l'étape 360, le noeud $A$ génère un entier $\alpha_i$ et transmet $\alpha_i G$ au noeud $B_i$.

Le noeud $B_i$ possède une clé privée $b_i$ et une clé publique correspondante $Q_{B_i} = b_i G$.

A l'étape 370, le noeud $B_i$ calcule des données de reconstruction de clé privée et de clé publique comme suit : Le noeud $B_i$ génère un entier $k_{B_i}$ compris dans l'intervalle [1,$n$-1] et calcule une donnée de reconstruction de clé publique $\gamma_{A_i}$ au moyen de :

$$\gamma_{A_i} = \alpha_i G + k_{B_i} G \tag{8-1}$$

Le noeud indexeur $B_i$ calcule le condensat $e_{A_i} = h(\gamma_{A_i} \| ID_A)$ ou $e_{A_i} = h(\gamma_{A_i} \| ID_A \| D_{A_i})$ ou bien encore, en consolidant les certificats implicites successifs, $e_{A_i} = h(\gamma_{A_i} \| \gamma_{A_{i\text{-}1}} \| \| ID_A)$ voire le condensat $e_{A_i} = h(\gamma_{A_i} \| \gamma_{A_{i\text{-}1}} \| ID_A \| D_{A_i})$ où $D_{A_i}$ est la date de validité du certificat implicite du noeud $B_i$. Le cas échéant, on pourra ajouter dans l'opérande de la fonction de hachage un taux de confiance et réputation (encore dénommé taux T&R) du noeud $B_i$. Le taux T&R est une estimation de la confiance et de la réputation du noeud établi à partir des autres noeuds du réseau. La notion de T&R est bien établie dans le domaine des communications P2P (Peer to Peer). On pourra notamment en trouver une description dans l'article de A. Medic. intitulé "Survey of Computer Trust and Reputation Models - The Literature Overview" publié dans Int. J. Inf, 2012, vol. 2, no 3. L'incorporation du taux T&R dans l'opérande de la fonction de hachage permet aux autres noeuds d'avoir une confiance plus élevée dans le lien entre l'identifiant et le certificat implicite.

Quelle que soit la forme retenue pour le condensat, le noeud $B_i$ détermine à partir de ce dernier une donnée de reconstruction de clé privée de l'itération $i$ :

$$s_{A_i} = e_{A_i} k_{B_i} + b_i \mod.n \tag{8-2}$$

A l'étape 380, le noeud indexeur $B_i$ envoie au noeud $A$ le couple $(s_{A_i}, \gamma_{A_i})$ constitué par la donnée de reconstruction de clé privée et la donnée de reconstruction de clé publique de l'itération $i$.

En outre, le noeud $B_i$ transmet au noeud $B_0$ le certificat implicite $\gamma_{Ai}$ et, le cas échéant, la date de validité $D_{A_i}$ de ce certificat. Le noeud $B_0$ stocke dans sa mémoire locale le certificat implicite $\gamma_{Ai}$ (ainsi que, éventuellement, $D_i$ et $T \& R_i$) en relation avec la valeur de hachage $h(ID_A)$.

A l'étape 390, le noeud $A$ construit une nouvelle clé privée à partir de la donnée de reconstruction de clé privée de l'itération courante $i$ et de la clé privée de l'itération précédente, $i$-1, par:

$$a_{A_i} = a_{A_{i\text{-}1}} + e_{A_i} \alpha_i + s_{A_i} \mod.n \tag{9-1}$$

De manière similaire, le noeud $A$ construit une nouvelle clé publique à partir de la donnée de reconstruction de clé publique de l'itération $i$ et de la clé publique de l'itération $i$-1:

$$Q_{A_i} = Q_{A_{i-1}} + e_{A_i}\gamma_{A_i} + Q_{B_i} \qquad (9\text{-}2)$$

On peut montrer par récurrence que $Q_{A_i} = a_{A_i}G$. En effet, la propriété est bien vérifiée pour $i = 0$ et si $Q_{A_{i-1}} = a_{A_{i-1}}G$ puisque l'on a en vertu de (9-2) et (8-1):

$$Q_{A_i} = a_{A_{i-1}}G + e_{A_i}\left(\alpha_i G + k_{B_i}G\right) + b_i G = \left(a_{A_{i-1}} + e_{A_i}\alpha_i + e_{A_i}\alpha_i + b_i\right)G \qquad (10)$$

et d'après (9-1) et (8-2): $a_{A_i} = a_{A_{i-1}} + e_{Ai}\alpha_i + s_{A_i} = a_{A_{i-1}} + e_{A_i}\alpha_i + e_{A_i}k_{B_i} + b_i$.

On notera que, pour une itération courante $i$, le noeud $B_0$ qui gère $h(ID_A)$ dans la DHT, stocke dans sa mémoire, en relation avec $h(ID_A)$, la liste des certificats implicites $\gamma_{Aj}$, $j = 0,...,i$ et, le cas échéant, la liste des dates de validité $D_{Aj}$ et/ou les taux de confiance et réputation $T \& R_j$, $j = 0,...,i$. Le noeud $A$ peut quant à lui se contenter de stocker dans sa mémoire sa dernière clé privée $a_{A_i}$ ainsi que ses deux derniers certificats implicites $\gamma_{A_i}$, $\gamma_{A_{i-1}}$, voire son dernier certificat implicite $\gamma_{A_i}$ seulement.

Le dernier certificat implicite du noeud $A$, $\gamma_{A_i}$ suffit pour mettre à jour la clé publique au moyen de (9-2) dès lors que l'on connait la clé publique du noeud $Q_{B_i}$. Ainsi, un noeud $C$ (Bob) souhaitant initier une communication sécurisée avec le noeud $A$ peut récupérer auprès du noeud $B_0$, gérant $h(ID_A)$, le dernier certificat implicite du noeud $A$, $\gamma_{A_i}$, et en déduire sa clé publique courante $Q_{A_i}$. Réciproquement, le noeud $A$ doit contacter le noeud indexeur, $D_0$, gérant $h(ID_c)$ dans la DHT pour récupérer le dernier certificat implicite du noeud $C$ et en déduire sa clé publique courante $Q_{c_i}$. Les noeuds $A$ et $C$ peuvent alors communiquer entre eux de manière sécurisée.

Dans ces conditions, on comprendra qu'une attaque du type «man in the middle» nécessiterait pour réussir d'opérer simultanément entre le noeud $A$ et son indexeur, $B_0$, entre le noeud $C$ et son indexeur $D_0$ ainsi qu'entre $A$ et $C$, ce qui est très difficile à réaliser sauf à contrôler tout le réseau. En outre, chacun des noeuds $A$ et $C$ peut s'assurer de la cohérence de la clé publique de l'autre en vérifiant si le chaînage des certificats implicites est valide. Ainsi, le noeud $C$ pourra s'assurer de la cohérence de la clé publique $Q_{A_i}$ avec le noeud $A$ en vérifiant auprès de $B_0$ que celle-ci a bien été obtenue au moyen de la relation (7-2) à partir des certificats implicites $\gamma_{A_i}, \gamma_{A_{i-1}},..., \gamma_{A_0}$.

Selon la présente invention, les certificats ne sont donc pas stockés auprès d'une autorité de certification unique mais auprès de noeuds indexeurs participant à la DHT.

Le stockage distribué des certificats implicites ainsi que le chainage de ces certificats pour l'obtention des clés publiques et privées des noeuds rendent le réseau particulièrement résistant aux attaques de type « man in the middle ».

## Revendications

1. Méthode de gestion de certificats implicites de clés publiques pour un réseau de communication, les clés publiques étant relatives à un cryptosystème sur courbe elliptique, chaque certificat implicite permettant d'identifier une clé publique d'un noeud du réseau et chaque noeud étant identifié par un identifiant,

   - un premier certificat implicite ($\gamma_{A_0}$) d'un noeud $A$ est calculé par et stocké dans un premier noeud indexeur ($B_0$), le premier noeud indexeur étant déterminé par une table de hachage distribuée, à partir d'un condensat d'identifiant obtenu comme hachage d'une première valeur, contenant l'identifiant du noeud $A$ ;
   - une première clé publique ($Q_{A_{i-1}}$) du noeud $A$ est calculée à partir du premier certificat implicite et de la clé publique du premier noeud

   **caractérisée en ce que** :

   - un second certificat implicite ($\gamma_{A_1}$) du noeud $A$ est calculé par un second noeud indexeur ($B_1$), le second noeud indexeur étant déterminé par ladite table de hachage distribuée, à partir d'un premier condensat de certificat ($e_{A_0}$) obtenu comme hachage d'une seconde valeur, contenant le premier certificat implicite et l'identifiant du noeud $A$, ledit second certificat implicite étant transmis au premier noeud indexeur pour y être stocké ;
   - une seconde clé publique ($Q_{A_1}$) du noeud $A$ est calculée à partir de la première clé publique ($Q_{A_0}$) du noeud $A$ et de la clé publique du second noeud indexeur ($Q_{B_1}$).

2. Méthode de gestion de certificats implicites selon la revendication 1, **caractérisée en ce que** le condensat d'identifiant est obtenu par $h(ID_A\|keyword)$ où $ID_A$ est l'identifiant du noeud $A$, *keyword* est un mot de passe connu des noeuds du réseau, $\|$ est une opération de concaténation et $h$ est une fonction de hachage.

3. Méthode de gestion de certificats implicites selon la revendication 1 ou 2, **caractérisée en ce que** :

- la première clé publique du noeud $A$ est calculée par $Q_{A0} = e_{A_0}\gamma_{A_0} + Q_{B_0}$ où $\gamma_{A_0}$ est le premier certificat implicite, $e_{A_0}$ est le premier condensat de certificat et $Q_{B_0}$ est la clé publique du premier noeud indexeur;
- la seconde clé publique du noeud $A$ est calculée par $Q_{A1} = Q_{A0} + e_{A_1}\gamma_{A_1} + Q_{B_1}$ où $\gamma_{A_1}$ est le second certificat implicite du noeud $A$, $e_{A_1}$ est un second condensat de certificat obtenu comme hachage d'une seconde valeur, contenant le second certificat implicite du noeud $A$, et $Q_{B_1}$ est la clé publique du second noeud indexeur.

4. Méthode de gestion de certificats implicites selon la revendication 1 ou 2, **caractérisée en ce que** l'on génère une pluralité de certificats implicites pour le noeud $A$ au cours d'une pluralité d'itérations successives, et qu'à l'itération $i$ :

- un $(i+1)^{\text{ème}}$ noeud indexeur ($B_i$) calcule un $(i+1)^{\text{ème}}$ certificat implicite ($Q_{A_{i-1}}\gamma_{A_i}$) du noeud $A$, le $(i+1)^{\text{ème}}$ noeud indexeur étant déterminé par la table de hachage distribuée, à partir d'un $i^{\text{ème}}$ condensat de certificat ($e_{A_{i-1}}$) obtenu comme hachage d'une $(i+1)^{\text{ème}}$ valeur contenant le $i^{\text{ème}}$ certificat implicite du noeud $A$ obtenu à l'itération précédente, et l'identifiant du noeud $A$ ($ID_A$), ledit $(i+1)^{\text{ème}}$ certificat implicite du noeud $A$ étant transmis au premier noeud indexeur pour y être stocké ;
- une $(i+1)^{\text{ème}}$ clé publique ($Q_{A_i}$) du noeud $A$ est calculée à partir de la $i^{\text{ème}}$ clé publique ($Q_{A_{i-1}}$) du noeud $A$, obtenue à l'itération précédente, et de la clé publique du $(i+1)^{\text{ème}}$ noeud indexeur ($Q_{B_1}$).

5. Méthode de gestion de certificats implicites selon la revendication 4, **caractérisée en ce que** le $(i+1)^{\text{ème}}$ condensat de certificat est obtenu par $e_{A_i} = h(\gamma_{A_i}\|ID_A)$ ou bien $e_{A_i} = h(\gamma_{A_i}\|\gamma_{A_{i-1}}\|ID_A)$ où $\gamma_{A_i}$ et $\gamma_{A_{i-1}}$ sont respectivement les $(i+1)^{\text{ème}}$ et $i^{\text{ème}}$ certificats implicites, $ID_A$ est l'identifiant du noeud $A$ et $\|$ est une opération de concaténation et $h$ est une fonction de hachage.

6. Méthode de gestion de certificats implicites selon la revendication 4, **caractérisée en ce que** le $(i+1)^{\text{ème}}$ condensat de certificat est obtenu par $e_{A_i} = h(\gamma_{A_i}\|ID_A\|D_{A_i})$ ou bien $e_{A_i} = h(\gamma_{A_i}\|\gamma_{A_{i-1}}\|ID_A\|D_{A_i})$ où $\gamma_{A_i}$ et $\gamma_{A_{i-1}}$ sont respectivement les $(i+1)^{\text{ème}}$ et $i^{\text{ème}}$ certificats implicites, $ID_A$ est l'identifiant du noeud $A$, $D_{A_i}$ est une date de validité associée au $(i+1)^{\text{ème}}$ certificat implicite, $\|$ est une opération de concaténation et $h$ est une fonction de hachage.

7. Méthode de gestion de certificats implicites selon l'une des revendications 4 à 6, **caractérisée en ce que** la $(i+1)^{\text{ème}}$ clé publique du noeud $A$ est calculée par $Q_{A_i} = Q_{A_{i-1}} + e_{A_i}\gamma_{A_i} + Q_{B_i}$ où $\gamma_{A_i}$ est le $(i+1)^{\text{ème}}$ certificat implicite du noeud $A$, $e_{A_i}$ est le $(i+1)^{\text{ème}}$ condensat de certificat et $Q_{B_i}$ est la clé publique du $(i+1)^{\text{ème}}$ noeud indexeur.

8. Méthode de gestion de certificats implicites selon l'une des revendications 4 à 7, **caractérisée en ce que** l'intervalle entre deux itérations successives a une durée fixe prédéterminée.

9. Méthode de gestion de certificats implicites selon l'une des revendications 4 à 7, **caractérisée en ce qu'**au $(i+1)^{\text{ème}}$ certificat implicite ($Q_{A_{i-1}}\gamma_{A_i}$) calculé à l'itération $i$, est associée une date de validité ($D_{A_i}$) et que l'on effectue l'itération suivante lorsque cette date de validité est échue.

10. Méthode de gestion de certificats implicites selon l'une des revendications 4 à 7, **caractérisée en ce que** l'intervalle entre deux itérations successives a une durée pseudo-aléatoire.

11. Méthode de gestion de certificats implicites selon l'une des revendications 4 à 10, **caractérisée en ce qu'**à l'itération $i$, le premier noeud indexeur stocke, en relation avec le condensat d'identifiant, une liste des certificats implicites $\gamma_{A_j}$, $j = 0,...,i$ obtenus lors des itérations successives.

12. Méthode de gestion de certificats implicites selon la revendication 11, **caractérisée en ce que**, à l'itération $i$, le premier noeud indexeur stocke en relation avec le condensat d'identifiant, une liste des dates de validité $D_{A_j}$, $j = 0,...,i$ desdits certificats implicites et/ou une liste des taux de confiance et réputation $T \& R_j$, $j = 0,...,i$ où $T \& R_j$ est le taux de confiance et réputation du $(j+1)^{\text{ème}}$ noeud indexeur.

**Patentansprüche**

1. Verfahren zur Verwaltung von impliziten Zertifikaten von öffentlichen Schlüsseln für ein Kommunikationsnetzwerk, wobei sich die öffentlichen Schlüssel auf ein Kryptosystem auf einer elliptischen Kurve beziehen, wobei jedes implizite Zertifikat die Identifizierung eines öffentlichen Schlüssels eines Knotens des Netzwerks ermöglicht, und wobei jeder Knoten durch einen Identifikator identifiziert wird,

- wobei ein erstes implizites Zertifikat ($\gamma_{A_0}$) eines Knotens A berechnet wird durch und gespeichert wird in einem ersten Indexierknoten ($B_0$), wobei der erste Indexierknoten bestimmt wird durch eine verteilte Hashtabelle ausgehend von einem Identifikatorkondensat, das als Hashverarbeitung eines ersten Werts erhalten wird, das den Identifikator des Knotens A enthält;
- wobei ein erster öffentlicher Schlüssel ($Q_{A_0}$) des Knotens A berechnet wird ausgehend von dem ersten impliziten Zertifikat und dem öffentlichen Schlüssel des ersten Knotens,

**dadurch gekennzeichnet, dass**:

- ein zweites implizites Zertifikat ($\gamma_{A_i}$) des Knotens A berechnet wird durch einen zweiten Indexierknoten ($B_1$), wobei der zweite Indexierknoten bestimmt wird durch die verteilte Hashtabelle ausgehend von einem ersten Zertifikatkondensat ($e_{A_0}$), das als Hashverarbeitung eines zweiten Werts erhalten wird, das das erste implizite Zertifikat und den Identifikator des Knotens A enthält, wobei das zweite implizite Zertifikat an den ersten Indexierknoten übertragen wird, um dort gespeichert zu werden;
- wobei ein zweiter öffentlicher Schlüssel ($Q_{A_i}$) des Knotens A berechnet wird ausgehend von dem ersten öffentlichen Schlüssel ($Q_{A_0}$) des Knotens A und dem öffentlichen Schlüssel des zweiten Indexierknotens ($Q_{B_1}$).

2. Verfahren zur Verwaltung von impliziten Zertifikaten nach Anspruch 1, **dadurch gekennzeichnet, dass** das Identifikatorkondensat erhalten wird durch $h\,(ID_A \,\|\, keyword)$, wobei $ID_A$ der Identifikator des Knotens A ist, *keyword* ein bekanntes Passwort der Knoten des Netzwerks ist, $\|$ eine Verknüpfungsoperation ist, und *h* eine Hashverarbeitungsfunktion ist.

3. Verfahren zur Verwaltung von impliziten Zertifikaten nach Anspruch 1 oder 2, **dadurch gekennzeichnet, dass**:

- der erste öffentliche Schlüssel des Knotens A berechnet wird durch $Q_{A_0} = e_{A_0}\gamma_{A_0} + Q_{B_0}$, wobei $\gamma_{A_0}$ das erste implizite Zertifikat ist, $e_{A_0}$ das erste Zertifikatkondensat ist, und $Q_{B_0}$ der öffentliche Schlüssel des ersten Indexierknotens ist;
- der zweite öffentliche Schlüssel des Knotens A berechnet wird durch $Q_{A_i} = Q_{A_0} + e_{A_i}\gamma_{A_i} + Q_{B_1}$, wobei $\gamma_{A_i}$ das zweite implizite Zertifikat des Knotens A ist, $e_{A_i}$ ein zweites Zertifikatkondensat ist, das als Hashverarbeitung eines zweiten Werts erhalten wird, das das zweite implizite Zertifikat des Knotens A enthält, und $Q_{B_i}$ der öffentliche Schlüssel des zweiten Indexierknotens ist.

4. Verfahren zur Verwaltung von impliziten Zertifikaten nach Anspruch 1 oder 2, **dadurch gekennzeichnet, dass** man eine Mehrzahl von impliziten Zertifikaten für den Knoten A im Verlauf einer Mehrzahl von sukzessiven Iterationen generiert, und dass bei der Iteration *i*:

- ein ($i$+1)-ter Indexierknoten ($B_i$) ein ($i$+1)-tes implizites Zertifikat ($\gamma_{A_i}$) des Knotens A berechnet, wobei der ($i$+1)-te Indexierknoten bestimmt wird durch die verteilte Hashtabelle ausgehend von einem $i$-ten Zertifikatkondensat ($e_{A_{i-1}}$), das erhalten wird als Hashverarbeitung eines ($i$+1)-ten Werts, das das i-te implizite Zertifikat des Knotens A enthält, erhalten bei der vorhergehenden Iteration, und dem Identifikator des Knotens A ($ID_A$), wobei das ($i$+1)-te implizite Zertifikat des Knotens A an den ersten Indexierknoten übertragen wird, um dort gespeichert zu werden;
- ein ($i$+1)-ter öffentlicher Schlüssel ($Q_{A_i}$) des Knotens A berechnet wird ausgehend von dem $i$-ten öffentlichen Schlüssel ($Q_{A_{i-1}}$) des Knotens A, erhalten bei der vorhergehenden Iteration, und dem öffentlichen Schlüssel des ($i$+1)-ten Indexierknotens ($Q_{B_i}$).

5. Verfahren zur Verwaltung von impliziten Zertifikaten nach Anspruch 4, **dadurch gekennzeichnet, dass** das ($i$+1)-te Zertifikatkondensat erhalten wird durch $e_{A_i} = h(\gamma_{A_i} \,\|\, ID_A)$, oder aber $e_{A_i} = h\,(\gamma_{A_i} \,\|\, \gamma_{A_{i-1}}\| ID_A)$, wobei $\gamma_{A_i}$ und $\gamma_{A_{i-1}}$ das ($i$+1)-te beziehungsweise das $i$-te implizite Zertifikat sind, $ID_A$ der Identifikator des Knotens A ist, und $\|$ eine Verknüpfungsoperation ist und *h* eine Hashverarbeitungsfunktion ist.

6. Verfahren zur Verwaltung von impliziten Zertifikaten nach Anspruch 4, **dadurch gekennzeichnet, dass** das ($i$+1)-te Zertifikatkondensat erhalten wird durch $e_{A_i} = h\,(\gamma_{A_i} \,\|\, ID_A\|D_{A_i})$ oder aber $e_{A_i} = h\,(\gamma_{A_i} \,\|\, \gamma_{A_{i-1}}\| ID_A \,\|\, D_{A_i})$, wobei $\gamma_{A_i}$ und $\gamma_{A_{i-1}}$ das ($i$+1)-te beziehungsweise das $i$-te implizite Zertifikat sind, $ID_A$ der Identifikator des Knotens A ist, $D_{A_i}$ ein Gültigkeitsdatum ist, das dem ($i$+1)-ten impliziten Zertifikat zugeordnet ist, $\|$ eine Verknüpfungsoperation ist, und *h* eine Hashverarbeitungsfunktion ist.

7. Verfahren zur Verwaltung von impliziten Zertifikaten nach einem der Ansprüche 4 bis 6, **dadurch gekennzeichnet, dass** der $(i+1)$-te öffentliche Schlüssel des Knotens $A$ berechnet wird durch $Q_{A_i} = Q_{A_{i-1}} + e_{A_i}\gamma_{A_i} + Q_{B_i}$, wobei $\gamma_{A_i}$ das $(i+1)$-te implizite Zertifikat des Knotens A ist, $e_{A_i}$ das $(i+1)$-te Zertifikatkondensat ist, und $Q_{B_1}$ der öffentliche Schlüssel des $(i+1)$-ten Indexierknotens ist.

8. Verfahren zur Verwaltung von impliziten Zertifikaten nach einem der Ansprüche 4 bis 7, **dadurch gekennzeichnet, dass** das Intervall zwischen zwei sukzessiven Iterationen eine vorbestimmte feste Dauer hat.

9. Verfahren zur Verwaltung von impliziten Zertifikaten nach einem der Ansprüche 4 bis 7, daduch gekennzeichnet, dass dem $(i+1)$-ten impliziten Zertifikat $(\gamma_{A_i})$, berechnet bei der Iteration $i$, ein Gültigkeitsdatum $(D_{A_i})$ zugeordnet ist, und man die folgende Iteration durchführt, wenn dieses Gültigkeitsdatum abgelaufen ist.

10. Verfahren zur Verwaltung von impliziten Zertifikaten nach einem der Ansprüche 4 bis 7, **dadurch gekennzeichnet, dass** das Intervall zwischen zwei sukzessiven Iterationen eine pseudozufällige Dauer hat.

11. Verfahren zur Verwaltung von impliziten Zertifikaten nach einem der Ansprüche 4 bis 10, **dadurch gekennzeichnet, dass** der erste Indexierknoten bei der Iteration $i$ in Relation mit dem Identifikatorkondensat eine Liste der impliziten Zertifikate $\gamma_{A_j}$ speichert, mit $j = 0,..., i$, die während der sukzessiven Iterationen erhalten werden.

12. Verfahren zur Verwaltung von impliziten Zertifikaten nach Anspruch 11, **dadurch gekennzeichnet, dass** der erste Indexierknoten bei der Iteration $i$ in Relation mit dem Identifikatorkondensat eine Liste der Gültigkeitsdaten $D_{A_j}$ der impliziten Zertifikate speichert, mit $j = 0,..., i$, und/oder eine Liste der Vertrauens- und Reputationsgrade $T \& R_j$, mit $j = 0,..., i$, wobei $T \& R_j$ der Vertrauens- und Reputationsgrad des $(j+1)$-ten Indexierknotens ist.

## Claims

1. Method of managing implicit certificates of public keys for a communication network, the public keys being related to an elliptic curve cryptosystem, each implicit certificate being usable to identify a public key of a node on the network and each node being identified by an identifier:

   - a first implicit certificate $(\gamma_{A_0})$ of a node $A$ is calculated by and is stored in a first indexing node $(B_0)$, the first indexing node being determined by a distributed hash table, starting from an identifier condensate obtained by hashing a first value containing the node identifier $A$;
   - a first public key $(Q_{A_0})$ of node $A$ is calculated from the first implicit certificate and the public key of the first indexing node $(Q_{B_0})$, **characterised in that**:

      - a second implicit certificate $(\gamma_{A_1})$ of node $A$ is calculated by a second indexing node $(B_1)$, the second indexing node being determined by said distributed hash table from a first certificate condensate $(e_{A_0})$ obtained by hashing a second value containing the first implicit certificate and the node identifier $A$, said second implicit certificate being transmitted to the first indexing node to be stored in it;
      - a second public key $(Q_{A_1})$ of node $A$ is calculated from the first public key $(Q_{A_0})$ of node $A$ and the public key of the second indexing node $(Q_{B_1})$.

2. Method of managing implicit certificates according to claim 1, in which the identifier condensate is obtained by $h(ID_A\|keyword)$ where $ID_A$ is the identifier of node $A$, *keyword* is a known password of network nodes, $\|$ is a concatenation operation and h is a hash function.

3. Method of managing implicit certificates according to claim 1 or 2, **characterised in that**:

   - the first public key of node $A$ is calculated by $Q_{A_0} = e_{A0}\gamma_{A_0} + Q_{B_0}$ in which $\gamma_{A_0}$ is the first implicit certificate, $e_{A_0}$ is the first certificate condensate and $Q_{B_0}$ is the public key of the first indexing node;
   - the second public key of node $A$ is calculated by $Q_{A_1} = Q_{A_0} + e_{A_1}\gamma_{A_1} + Q_{B_1}$ in which $\gamma_{A_1}$ is the second implicit certificate of node $A$, $e_{A_1}$ is a second certificate condensate obtained by hashing a second value, containing the second implicit certificate of node $A$, and $Q_{B_1}$ is the public key of the second indexing node.

4. Method of managing implicit certificates according to claim 1 or 2, **characterised in that** a plurality of implicit certificates are generated for node $A$ during a plurality of successive iterations, and **in that** at iteration $i$ :l

- an $(i+1)^{th}$ indexing node $(B_i)$ calculates a $(i+1)^{th}$ implicit certificate $(\gamma_{Ai})$ for node $A$, the $(i+1)^{th}$ indexing node being determined by the distributed hash table from a $i^{th}$ certificate condensate $(e_{A_{i-1}})$ obtained by hashing a $(i+1)^{th}$ value containing the $i^{th}$ implicit certificate of node $A$ obtained in the previous iteration, and the identifier of node $A$ $(ID_A)$, said $(i+1)^{th}$ implicit certificate of node $A$ being transmitted to the first indexing node to be stored in it;

- an $(i+1)^{th}$ public key $(Q_{Ai})$ of node $A$ is calculated from the $i^{th}$ public key $(Q_{A_{i-1}})$ of node $A$, obtained in the previous iteration, and the public key of the $(i+1)^{th}$ indexing node $(Q_{B_1})$.

5. Method of managing implicit certificates according to claim 4, **characterised in that** the $(i+1)^{th}$ certificate condensate is obtained by $e_{A_i} = h(\gamma_{A_i}\|ID_A)$ or $e_{A_i} = h(\gamma_{A_i}\|\gamma_{A_{i-1}}\|ID_A)$ in which $\gamma_{A_i}$ and $\gamma_{A_{i-1}}$ are the $(i+1)^{th}$ and $i^{th}$ implicit certificates respectively, $ID_A$ is the node identifier $A$ and $\|$ is a concatenation operation and $h$ is a hash function.

6. Method of managing implicit certificates according to claim 4, **characterised in that** the $(i+1)^{th}$ certificate condensate is obtained by $e_{A_i} = h(\gamma_{A_i}\|ID_A\|D_{A_i})$ or $e_{A_i} = h(\gamma_{A_i}\|\gamma_{A_{i-1}}\|ID_A\|D_{A_i})$ in which $\gamma_{A_i}$ and $\gamma_{A_{i-1}}$ are the $(i+1)^{th}$ and $i^{th}$ implicit certificates, $ID_A$ is the node identifier $A$, $D_{A_i}$ is a validity date associated with the $(i+1)^{th}$ implicit certificate, $\|$ is a concatenation operation and $h$ is a hash function.

7. Method of managing implicit certificates according to one of claims 4 to 6, **characterised in that** the $(i+1)^{th}$ public key of node $A$ is calculated by $Q_{A_i} = Q_{A_{i-1}} + e_{A_i}\gamma_{A_i} + Q_{B_i}$ in which $\gamma_{A_i}$ is the $(i+1)^{th}$ implicit certificate of node $A$, $e_{A_i}$ is the $(i+1)^{th}$ certificate condensate and $Q_{B_i}$ is the public key of the $(i+1)^{th}$ indexing node.

8. Method of managing implicit certificates according to one of claims 4 to 7, **characterised in that** the interval between two successive iterations has a predetermined fixed duration.

9. Method of managing implicit certificates according to one of claims 4 to 7, **characterised in that** the $(i+1)^{th}$ implicit certificate $(\gamma_{A_i})$ calculated in iteration $i$, is associated with a validity date $(D_{A_i})$ and **in that** the next iteration is made when this validity date has expired.

10. Method of managing implicit certificates according to one of claims 4 to 7, **characterised in that** the interval between successive iterations has a pseudo-random duration.

11. Method of managing implicit certificates according to one of claims 4 to 10, **characterised in that** in iteration $i$, the first indexing node stores a list of implicit certificates $\gamma_{A_j}$, $j = 0,...,i$ obtained during successive iterations, in relation to the identifier condensate.

12. Method of managing implicit certificates according to claim 11, **characterised in that**, in iteration $i$, the first indexing node stores a list of validity dates $D_{A_j}$, $j = 0,...,i$ of said implicit certificates and/or a list of trust and reputation ratios $T \& R_j$, $j = 0,...,i$ in relation to the identifier condensate, in which $T \& R_j$ is the trust and reputation ratio of the $(j+1)^{th}$ indexing node.

$$2^m \equiv 0$$

$B_N$            $B_0$

$B_1$

$B_2$

**Fig. 1**

$$calcul\ de\ h(ID_A)$$
$$recherche\ du\ noeud\ indexeur\ B_0\ dans\ DHT$$

210

$$A\ génère\ \alpha_0 G$$
$$transmission\ à\ B_0$$

220

$$calcul\ du\ certificat\ implicite\ \gamma_{A_0}$$
$$calcul\ du\ condensat\ de\ certificat\ e_{A_0}$$
$$calcul\ de\ la\ donnée\ s_{A_0}$$

230

$$B_0\ transmet\ à\ A: \left(s_{A_0}, \gamma_{A_0}\right)$$
$$B_0\ \ stocke\ \gamma_{A_0}$$

240

$$calcul\ par\ A\ de\ la\ 1^{ère}\ clé\ privée\ a_{A_0}$$
$$et\ de\ la\ 1^{ère}\ clé\ publique\ Q_{A_0}$$

250

$$calcul\ du\ 1^{er}\ condensat\ de\ certificat\ e_{A_0}$$
$$recherche\ du\ noeud\ indexeur\ B_1\ dans\ DHT$$

255

$$A\ génère\ \alpha_1 G$$
$$transmission\ à\ B_1$$

260

$$calcul\ du\ certificat\ implicite\ \gamma_{A_1}$$
$$calcul\ du\ condensat\ de\ certificat\ e_{A_1}$$
$$calcul\ de\ la\ donnée\ s_{A_1}$$

270

**Fig. 2**

$$B_1\ transmet\ à\ A: \left(s_{A_1}, \gamma_{A_1}\right)$$
$$B_1\ transmet\ à\ B_0 : \gamma_{A_0}$$

280

$$calcul\ par\ A\ de\ la\ 2^{nde}\ clé\ privée\ a_{A_1}$$
$$et\ de\ la\ 2^{nde}\ clé\ publique\ Q_{A_1}$$

290

**Fig. 3**

$$\text{calcul de } h\left(ID_A\right)$$
$$\text{recherche du noeud indexeur } B_0 \text{ dans DHT}$$

310

$$A \text{ génère } \alpha_0 G$$
$$\text{transmission à } B_0$$

320

$$\text{calcul du certificat implicite } \gamma_{A_0}$$
$$\text{calcul du condensat de certificat } e_{A_0}$$
$$\text{calcul de la donnée } s_{A_0}$$

330

$$B_0 \text{ transmet à } A : \left(s_{A_0}, \gamma_{A_0}\right)$$
$$B_0 \text{ stocke } \gamma_{A_0}$$

340

$$\text{calcul par } A \text{ de la } 1^{\text{ère}} \text{ clé privée } a_{A_0}$$
$$\text{et de la } 1^{\text{ère}} \text{ clé publique } Q_{A_0}$$

350

*itération i*

$$\text{calcul du condensat de certificat } e_{A_{i-1}}$$
$$\text{recherche du noeud indexeur } B_i \text{ dans DHT}$$

355

$$A \text{ génère } \alpha_i G$$
$$\text{transmission à } B_i$$

360

$$\text{calcul du certificat implicite } \gamma_{A_i}$$
$$\text{calcul du condensat de certificat } e_{A_i}$$
$$\text{calcul de la donnée } s_{A_i}$$

370

$$B_i \text{ transmet à } A : \left(s_{A_i}, \gamma_{A_i}\right)$$
$$B_i \text{ transmet à } B_0 : \gamma_{A_i}$$

380

$$\text{calcul par } A \text{ de la clé privée } a_{A_i}$$
$$\text{et de la clé publique } Q_{A_i}$$

390

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **S. SARMADY.** *A Survey on Peer-to-Peer and DHT,* 2010

- **A. MEDIC.** Survey of Computer Trust and Reputation Models - The Literature Overview. *Int. J. Inf,* 2012, vol. 2 (3